# EUROPEAN PATENT APPLICATION

(11) **EP 1 401 194 A1**
(43) Date of publication of application: **24.03.2004**
(21) Application number: 03021202.1
(22) Date of filing: 18.09.2003
(51) Int. Cl.: H04N 3/185

(54) **Voltage stabilizing circuit for video display appliance**

(30) Priority: 19.09.2002 KR 2002057214
(71) Applicant: LG ELECTRONICS INC., Seoul (KR)
(72) Inventor: Suk, Sang Moon, Doryang 2-dong Kyungsangbuk-do (KR)
(74) Representative: Manitz, Finsterwald & Partner GbR

(57) **Abstract**

Disclosed is a voltage stabilizing circuit for a high-voltage/deflection separation type video display appliance. The voltage stabilizing circuit includes an SMPS transformer for receiving an electric power through its primary winding and deriving voltage in its secondary winding, a regulation compensating coil for inducing an electric power corresponding to the electric power from the secondary winding of the SMPS transformer, a PWM control circuit for receiving the electric power induced in the regulation compensating coil to output a PWM control signal corresponding to the received electric power, and a switching section for switching the input electric power inputted to primary winding of the SMPS transformer according to the PWM control signal from the PWM control circuit.

## Description

### BACKGROUND OF THE INVENTION

### Field of the Invention

The present invention relates to a high-voltage/deflection separation type video display appliance, and more particularly, to a voltage stabilizing circuit for a high-voltage/deflection separation type video display appliance.

### Description of the Related Art

Generally, video display appliances are classified into two types, a high voltage/deflection integration type and a high-voltage/deflection separation type.

In conventional video display appliances such as television receivers, a horizontal deflection circuit and a high voltage circuit are integrated into one unit. However, due to the greatly increased resolution of large-sized video display appliances, a new proposal has included a video display appliance with the high voltage circuit separated from the horizontal defection circuit.

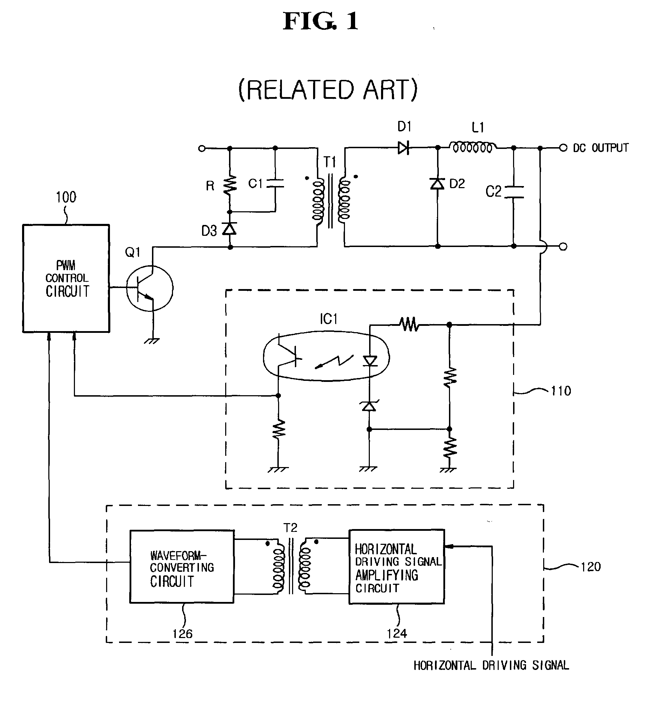

FIG. 1 is the circuit diagram of a voltage stabilizing circuit of a conventional high-voltage/deflection separation type video display appliance. Referring to FIG. 1, the construction and operation of the conventional voltage stabilizing circuit will now be briefly described.

A PWM (Pulse Width Modulator) control signal outputted from a PWM control circuit 100 is applied to the base terminal of a transistor Q1, and a given voltage is applied to the primary winding of an SMPS (Switch Mode Power Supply) transformer T1 by the PWM control signal. The voltage applied to the primary winding of the SMPS transformer T1 is induced in the secondary winding of the SMPS transformer, and then is rectified by a rectifier circuit composed of diodes D1 and D2, an inductor L1 and a capacitor C2, which are connected to the secondary winding of the SMPS transformer to output a DC voltage.

A regulation compensating circuit 110 senses the DC voltage outputted to the secondary winding of the SMPS transformer using a photo coupler IC1, and feeds the sensed DC voltage back to the PWM control circuit 100. The PWM control circuit 100 outputs the PWM control signal to output a proper direct voltage by use of the feedback direct voltage.

A waveform converting section 120 is a circuit for converting the frequency of the PWM control circuit 100 so as to synchronize the horizontal frequency with the frequency of the PWM control circuit. The waveform converting section 120 amplifies a horizontal driving signal using a horizontal driving signal amplifying circuit 124 to output the amplified horizontal driving signal to a waveform converting circuit 126. The waveform converting circuit 126 converts the pulse type horizontal driving signal transferred through a dummy transistor T2 into a sawtooth wave signal in order to output the converted signal to the PWM control circuit 100.

The conventional regulation-compensating circuit 110 and the waveform converting section 120 are generally expensive. In addition, the need for a large number of components on a printed circuit board may increase labor expenses. The increased manufacturing costs of display appliances and the resulting high price thereof are due to such problems.

### SUMMARY OF THE INVENTION

Accordingly, the present invention is directed to a voltage stabilizing circuit for a video display appliance that substantially obviates one or more of the problems of the related art.

To achieve the above and other objects and advantages in accordance with the purpose of the invention, as embodied and broadly described herein, there is provided is a voltage stabilizing circuit for a high-voltage/deflection separation type video display appliance, comprising an SMPS transformer for receiving an electric power through its primary winding and deriving voltage in its secondary winding; a regulation compensating coil for inducing an electric power corresponding to the electric power from the secondary winding of the SMPS transformer; a PWM control circuit for receiving the electric power induced in the regulation compensating coil to output a PWM control signal corresponding to the received electric power; and a switching section for switching the input electric power inputted to primary winding of the SMPS transformer according to the PWM control signal from the PWM control circuit.

It is preferable that the voltage stabilizing circuit further comprises a waveform converting section which synchronizes a frequency of the PWM control signal with a horizontal frequency. The waveform converting section comprises a horizontal output transformer for receiving and including an amplified horizontal driving signal, a wire, wound around a magnetic core of the horizontal output transformer, for detecting the signal induced in the horizontal output transformer, and an induced signal wave form converting circuit for receiving and converting the signal detected by the wire into a predetermined wave signal to output the wave signal to the PWM control circuit.

Additional advantages, objects, and features of the invention will be set forth in part in the description that follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

### BRIEF DESCRIPTION OF THE DRAWINGS

The accompanying drawings, which are included to provide further understanding of the invention and are incorporated in and constitute a part of this application, illustrate embodiment(s) of the invention and together with the description, serve to explain the principle of the invention. In the drawings:

FIG. 1 is a circuit diagram of a conventional voltage stabilizing circuit of a conventional high-voltage/deflection separation type video display appliance; and

FIG. 2 is a circuit diagram of a voltage stabilizing circuit of a high-voltage/deflection separation type video display appliance according to the preferred embodiment of the present invention.

### DETAILED DESCRIPTION OF THE PREFERRED EMBODIMENT

Reference will now be made in detail to the preferred embodiment of the present invention, an example of which is illustrated in the accompanying drawing.

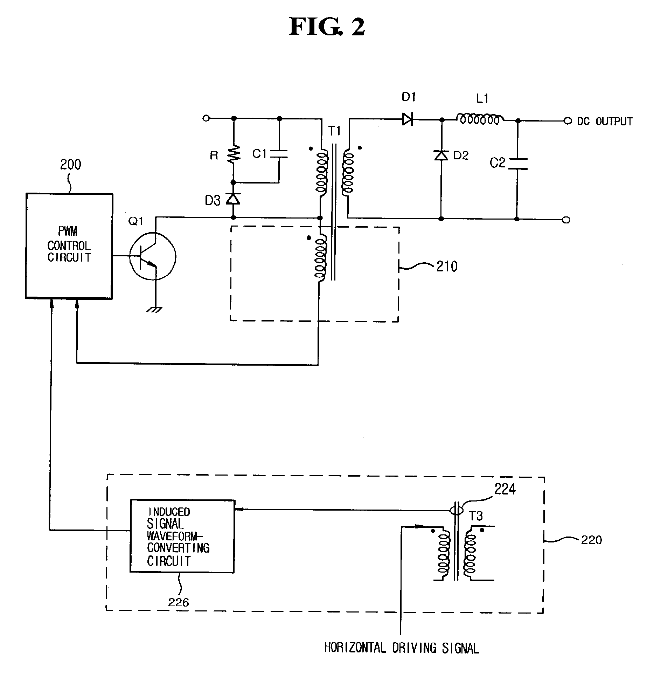

FIG. 2 is a circuit diagram of a voltage stabilizing circuit of a high-voltage/deflection separation type video display appliance according to the preferred embodiment of the present invention.

As shown in FIG. 2, the voltage stabilizing circuit according to the present invention includes a PWM control circuit 200, an SMPS transformer T1, a switching transistor Q1, a regulation compensating coil 210, and a waveform converting section 220. Each of these components will now be described below.

The PWM control circuit 200 outputs a PWM control signal to a base terminal of the transistor Q1.

The base terminal of the transistor Q1 is connected to an output terminal of the PWM control circuit 200, its collector terminal is connected to one end of a primary winding of the SMPS transformer T1, and its emitter terminal is grounded. The transistor Q1 performs a switching operation according to the PWM control signal inputted to the base terminal.

One end of the primary winding of the SMPS transformer T1 is connected to the collector terminal of the transistor Q1, and the SMPS transformer T1 includes the voltage inputted to its primary winding in its secondary winding according to the PWM control signal outputted from the PWM control circuit. Specifically, the PWM control signal, which is the output signal of the PWM control circuit 200, is inputted to the base terminal of the transistor Q1, and the collector terminal of the transistor Q1 is connected to the primary winding of the SMPS transformer T1.

The secondary winding of the SMPS transformer T1 is connected to a rectifier circuit including diodes D1 and D2, an inductor L1, and a capacitor C2. The rectifier circuit rectifies the voltage outputted from the secondary winding of the SMPS transformer T1, and outputs a DC voltage.

The regulation compensating coil 210 is connected to one end of the primary winding of the SMPS transformer T1, to which the collector terminal of the transistor Q1 is also connected, so that it receives the voltage induced in the secondary winding of the SMPS transformer T1 to feed the voltage back to the PWM control circuit 200. Accordingly, the PWM control circuit 200 controls the PWM control signal according to the level of the voltage fed back from the regulation compensating coil 210.

The voltage stabilizing circuit further includes a waveform converting section 220 for synchronizing the frequency of the PWM control circuit 200 with the horizontal frequency. The waveform converting section 220 includes a horizontal output transformer T3, a wire 224 for detecting a signal induced in the transformer T3, and an induced signal waveform converting circuit 226.

The amplified horizontal driving signal is inputted to the primary winding of the horizontal output transformer T3, and then induced in its secondary winding.

The induced signal detecting wire 224 is wound around the magnetic core of the horizontal output transformer T3 to detect the signal in the horizontal output transformer T3.

The induced signal waveform converting circuit 226 receives and converts the signal detected by the induced signal detecting wire 224 into a wave of signal to be used in the PWM control circuit 200, i.e., a sawtooth wave signal, to output the sawtooth wave signal to the PWM control circuit 200.

The forgoing embodiment is merely exemplary and is not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

## Claims

1. A voltage stabilizing circuit for a high-voltage/deflection separation type video display appliance, comprising:
an SMPS transformer for receiving an electric power through its primary winding and deriving voltage in its secondary winding;
a regulation compensating coil for inducing an electric power corresponding to the electric power from the secondary winding of the SMPS transformer;
a PWM control circuit for receiving the electric power induced in the regulation compensating coil to output a PWM control signal corresponding to the received electric power; and
a switching section for switching the input electric power inputted to primary winding of the SMPS transformer according to the PWM control signal from the PWM control circuit.

2. The voltage stabilizing circuit as claimed in claim 1, further comprising a waveform converting section for synchronizing a frequency of the PWM control circuit with a horizontal frequency.

3. The voltage stabilizing circuit as claimed in claim 1, wherein the waveform converting section comprises:
a horizontal output transformer for receiving and including an amplified horizontal driving signal;
a wire, wound around a magnetic core of the horizontal output transformer, for detecting the signal induced in the horizontal output transformer; and
an induced signal wave form converting circuit for receiving and converting the signal detected by the wire into

4. The voltage stabilizing circuit as claimed in claim 3, wherein the specified wave signal is a sawtooth wave signal

5. The voltage stabilizing circuit as claimed in claim 1, wherein the switching section comprises a transistor for performing a switching operation according to the PWM control signal, and its emitter collector terminals are connected between one end of the primary winding of the SMPS transformer and ground.

6. The voltage stabilizing circuit as claimed in claim 1, further comprising a rectifier circuit, connected to the secondary winding of the SMPS transformer, for rectifying the voltage outputted from the SMPS transformer.
